# EUROPÄISCHE PATENTANMELDUNG

(11) **EP 1 661 939 A1**
(43) Veröffentlichungstag der Anmeldung: **31.05.2006**
(21) Anmeldenummer: 05022859.2
(22) Anmeldetag: 20.10.2005
(51) Int. Cl.: C08J 9/00, C08J 9/12

(54) **Schaumstoffplatten mit verminderter Wärmeleitfähigkeit**

(30) Priorität: 29.11.2004 DE 102004057602
(71) Anmelder: BASF Aktiengesellschaft, 67056 Ludwigshafen (DE)
(72) Erfinder: Hahn, Klaus, Dr., 67281 Kirchheim (DE); Ruch, Joachim, Dr., 67157 Wachenheim (DE); Ehrmann, Gerd, Dr., 67146 Deidesheim (DE); Turznik, Gerhard, Dr., 67269 Grünstadt (DE)

(57) **Zusammenfassung**

Extrusions-Schaumstoffplatten auf Basis von Styrolpolymerisaten mit einer Dichte im Bereich von 20 bis 200 kg/m³ mit einer mittleren Zellgröße im Bereich von 0,08 bis 0,25 mm und einer mittleren Zellwanddicke im Bereich von 350 bis 1500 nm, verminderter Wärmeleitfähigkeit und hoher Druckfestigkeit sowie Verfahren zur Herstellung.

## Beschreibung

Die Erfindung betrifft Extrusions-Schaumstoffplatten auf Basis von Styrolpolymerisaten mit einer Dichte im Bereich von 20 bis 200 kg/m³ und verminderter Wärmeleitfähigkeit sowie Verfahren zur Herstellung.

Extrudierte Polystyrol-Schaumstoffe (XPS) werden in großem Maß zum Isolieren von Gebäuden und Gebäudeteilen eingesetzt. Für diesen Anwendungszweck müssen die Schaumstoffplatten eine möglichst niedrige Wärmeleitfähigkeit aufweisen. Neuerdings werden aus Umweltschutzgründen zur Herstellung von XPS-Platten halogenfreie Treibmittel, vorzugsweise CO₂-haltige Treibmittelgemische eingesetzt. CO₂ diffundiert aber wesentlich rascher als fluorhaltige Gase aus den Schaumstoffzellen heraus und wird durch Luft ersetzt. Aus diesem Grund ist die Wärmeleitfähigkeit von XPS-Platten, die mit CO₂-haltigen Treibmitteln hergestellt wurden, etwas höher als die von XPS-Platten, die mit Fluorkohlenwasserstoffen hergestellt wurden. Aus EP-A 863 175, EP-A 1 031 600, WO 02/081 555 und WO 01/04 191 ist bekannt, dass durch Zusatz von Graphitpartikeln bei der XPS-Herstellung die Wärmeleitfähigkeit reduziert werden kann.

Für einige Anwendungen ist jedoch die Druckfestigkeit der Schaumstoffplatten, insbesondere bei niedrigen Dichten, nicht ausreichend.

Aufgabe der vorliegenden Erfindung war es daher Extrusions-Schaumstoffplatten auf Basis von Styrolpolymerisaten zu finden, die neben einer geringern Wärmeleitfähigkeit eine hohe Druckfestigkeit, insbesondere bei niedrigen Dichten, aufweisen.

Demgemäß wurden Extrusions-Schaumstoffplatten auf Basis von Styrolpolymerisaten mit einer Dichte im Bereich von 20 bis 200 kg/m³, gefunden, die mittlere Zellgröße im Bereich von 0,08 bis 0,25 mm und die mittlere Zellwanddicke im Bereich von 350 bis 1500 nm aufweisen.

Es konnte gezeigt werden, das die Zellwanddicken einen signifikanten Einfluss auf die Dämmeigenschaften und die mechanischen Eigenschaften der extrudierten, IR-Absorber enthaltenden XPS-Schaumstoffplatten haben. Um geringe Wärmeleitfähigkeiten (gute Dämmeigenschaften) und gleichzeitig gute Druckfestigkeiten der Schaumstoffplatten zu erzielen, sind Zellwanddicken von 350 nm -1500 nm, vorzugsweise 800-1300 nm und insbesondere von 1000 nm-1200 nm besonders vorteilhaft.

Die erfindungsgemäßen XPS-Schaumstoffplatten weisen in der Regel eine Druckfestigkeit, gemessen nach DIN EN 826, im Bereich von 0,3 bis 1,0 N/mm², bevorzugt im Bereich von 0,35 bis 0,7 N/mm² auf. Bevorzugt liegt die Dichte der Schaumstoffplatten im Bereich von 25 bis 50 kg/m³ und die Dicke im Bereich von 20 bis 200 mm. Der Querschnitt beträgt in der Regel mindestens 50 cm², bevorzugt 100 bis 2000 cm².

Die Zellwanddicken können bei gegebener Dichte durch die Zellzahl pro Volumenanteil gezielt gesteuert werden. Als Nukleierungsmittel zur Einstellung der Zellzahlen und Zellwanddicken können feinteilige, anorganische Feststoffe, wie Talkum, Metalloxide, Silikate oder Polyethylenwachse in Mengen von 0,1-10 Gew.-%, bezogen auf das Styrolpolymerisat, eingesetzt werden. Der mittlere Teilchendurchmesser des anorganischen Feststoffes liegt in der Regel im Bereich von 0,01 bis 100*µ*m.

Die erfindungsgemäßen Extrusions-Schaumstoffplatten weisen bevorzugt Zellen auf, die gemessen nach DIN ISO 4590 zu mindestens 90%, insbesondere zu 95 bis 100% geschlossenzellig sind.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Die erfindungsgemäßen Extrusions-Schaumstoffplatten können durch Extrusion einer treibmittelhaltigen Styrolpolymerisat-Schmelze durch eine Düse in einen Bereich niedrigeren Drucks erhalten werden. Hierbei wird dem aufgeschmolzenen Styrolpolymer , 0,1 bis 10 Gew.-%, bezogen auf Styrol polymer, eines anorganischen Feststoffe mit einem mittleren Teilchendurchmesser im Bereich von 0,01 bis 100 *µ*m zugegeben und ein Treibmittel zudosiert und eingemischt.

Als Treibmittel können die üblichen flüchtigen organischen Verbindungen wie Fluorchlorkohlenwasserstoffe, Fluorkohlenwasserstoffe, Kohlenwasserstoffe, Alkohole, Ketone und Ether verwendet werden. Bevorzugt sind jedoch halogenfreie Treibmittel und Treibmittelgemische, z.B. anorganische Gase wie Kohlendioxid, Stickstoff, Argon und Ammoniak, gegebenenfalls im Gemisch mit Alkoholen, Kohlenwasserstoffen, Ketonen und Ethern verwendet.

Die Treibmittel werden in der Regel in Mengen von 3 bis 15, vorzugsweise 4 bis 12 Gew.-%, bezogen auf das Styrolpolymerisat eingesetzt. Bevorzugt wird ein Treibmittelgemisch aus 95 bis 20 Gew.-% CO₂, 5 bis 80 Gew.-% H20 und 0 bis 75 Gew.-% eines Alkohols, Ketons oder Ethers eingesetzt.

Bevorzugt wird die Extrusion in Gegenwart von 0,01 bis 10 Gew.-%, bezogen auf das Styrolpolymerisat, eines partikelförmigen IR-Absorbern durchgeführt. Geeignete IR-Absorber sind Ruß, Metallpulver, z. B. Aluminiumpulver und Titandioxid; bevorzugt ist Graphit mit einer Partikelgröße von 1 bis 100 mm, in Mengen von 0,02 bis 4 Gew.-%.

Auf diese Weise sind Extrusions-Schaumstoffplatten erhältlich, die eine Wärmeleitfähigkeit, gemessen bei 10°C nach DIN EN 13164 und DIN EN 12667, von 0,036 W/mK oder darunter aufweisen.

Zweckmäßigerweise werden bei dem erfindungsgemäßen Verfahren Flammschutzmittel zugesetzt, vorzugsweise 0,5 bis 5 Gew.-% organische Bromverbindungen mit einem Bromgehalt von mehr als 70 %, wie z.B. Hexabromcyclododecan, vorzugsweise zusammen mit 0,1 bis 0,5 Gew.-% einer C-C- oder O-O-labilen organischen Verbindung, wie Dicumylperoxid oder bevorzugt Dicumyl.

Als weitere übliche Zusatz- und/oder Hilfsstoffe können der Polystyrolmatrix Antistatika, Stabilisatoren, Farbstoffe, Füllstoffe und/oder Keimbildner in üblichen Mengen zugesetzt werden.

Mit dem erfindungsgemäßen Verfahren lassen sich Schaumstoffplatten mit einer Dichte von 20 bis 200 kg/m³, insbesondere von 25 bis 40 kg/m³herstellen, die eine Wärmeleitfähigkeit (λ-Wert) bei 10°C nach DIN EN 13164 und DIN EN 12667 von 0,036 W/mK oder darunter und gleichzeitig eine Druckfestigkeit im Bereich von 0,3 bis 1,0 N/mm² aufweisen

### Beispiele:

Polystyrol 158 K (BASF AG) wurde zusammen mit den in der Tabelle angegebenen Mengen (Gew.-% bezogen auf Polystyrol) Graphit (UF 2 96/97 der Fa. Kropfmühl), Ruß (ELF-TEX 415 der Fa CABOT, eingesetzt als 20%iger Batch in Polystyrol) und Talkum (mittlere Teilchengrößen 10 µm, Nukleierungsmittel) sowie 1,5% Hexabromcyclododecan (Flammschutzmittel) und 0,2% Dicumyl (Flammschutzsynergist) einem Extruder mit einem inneren Schneckendurchmesser von 53 mm kontinuierlich zugeführt und aufgeschmolzen.

Durch eine in dem Extruder angebrachte Einlassöffnung wurde ein Treibmittelgemisch aus 3,5 % CO₂ und 3,5% Ethanol, jeweils bezogen auf Polystyrol, kontinuierlich in den Extruder eingedrückt und in die Schmelze eingemischt. Das im Extruder gleichmäßig geknetete Schmelze-Treibmittelgemisch wurde sodann einem zweiten Extruder mit einem Schneckendurchmesser von 90 mm zugeführt und dort während einer Verweilzeit von ca. 10 min auf die zum Schäumen notwendige Temperatur abgekühlt. Die gekühlte Schmelze wurde anschließend durch eine Schlitzdüse mit 50 mm Breite in die Atmosphäre extrudiert. Der dabei entstehende Schaum wurde durch ein Werkzeug zu Platten mit 30 mm Dicke und 100 mm Breite geformt. Von den nach 14 Tage bei Raumtemperatur gelagerten Schaumstoffplatten wurden die Zellwanddicken durch Messung unter einem Elektronenmikroskop, die Zellgrößen (ASTM D 3842-69), die Dichten (DIN EN 1602), die Druckfestigkeiten (DIN EN 826) und die Wärmeleitfähigkeiten bei 10°C nach DIN EN 13164 und DIN EN 12667 bestimmt und in Tabelle 1 zusammengefasst.

Die erfindungsgemäßen Beispiele 1-4 zeigen gleichzeitig hohe Druckfestigkeiten und niedrige Wärmeleitfähigkeiten bei geringen Dichten.

**Tabelle 1:**

| Bsp. | IR-Absorber [Gew.-%] | Talkum [Gew.-%] | Zellwanddicke [nm] | Zell-Größe [mm] | Dichte [kg/m³] | Druckfestigkeit [N/mm²] | Wärmeleitfähigkeit [W/mK] |
|---|---|---|---|---|---|---|---|
| 1 | Graphit 1,0- | 0,5 | 850 | 0,110 | 33,1 | 0,340 | 0,0325 |
| 2 | Ruß 1,0 | 0,5 | 950 | 0,163 | 32,9 | 0,311 | 0,0330 |
| 3 | | 0,5 | 1190 | 0,195 | 31,9 | 0,305 | 0,0351 |
| 4 | | 1,0 | 1080 | 0,221 | 32,3 | 0,301 | 0,0350 |
| V1 | | | 1550 | 0,395 | 32,7 | 0,296 | 0,0369 |
| V2 | Graphit 3,0 | 1,5 | 250 | 0,070 | 32,4 | 0,271 | 0,0349 |
| V3 | Ruß 3,0 | 1,5 | 257 | 0,075 | 33,1 | 0,260 | 0,0352 |

## Patentansprüche

1. Extrusions-Schaumstoffplatten auf Basis von Styrolpolymerisaten mit einer Dichte im Bereich von 20 bis 200 kg/m³, **dadurch gekennzeichnet, dass** die mittlere Zellgröße im Bereich von 0,08 bis 0,25 mm und die mittlere Zellwanddicke im Bereich von 350 bis 1500 nm liegt.

2. Extrusions-Schaumstoffplatten nach Anspruch 1, **dadurch gekennzeichnet, dass** sie eine Druckfestigkeit, gemessen nach DIN EN 826, im Bereich von 0,3 bis 1,0 N/mm² aufweisen.

3. Extrusions-Schaumstoffplatten nach Anspruch 1 oder 2, **dadurch gekennzeichnet, dass** sie eine Wärmeleitfähigkeit, gemessen bei 10°C nach DIN EN 13164 und DIN EN 12667 von 0,036 W/mK oder darunter aufweisen.

4. Extrusions-Schaumstoffplatten nach einem der Ansprüche 1 bis 3, **dadurch gekennzeichnet, dass** sie 0,1 bis 10 Gew.-% Ruß oder Graphit enthalten.

5. Extrusions-Schaumstoffplatten nach einem der Ansprüche 1 bis 4, **dadurch gekennzeichnet, dass** sie 0,1 bis 10 Gew.-% eines anorganischen Feststoffes mit einem mittleren Teilchendurchmesser im Bereich von 0,01 bis 100*µ*m enthalten.

6. Extrusions-Schaumstoffplatten nach einem der Ansprüche 1 bis 5, **dadurch gekennzeichnet, dass** die Zellen gemessen nach DIN ISO 4590 zu mindestens 90% geschlossenzellig sind.

7. Verfahren zur Herstellung von Extrusions-Schaumstoffplatten durch Extrusion einer treibmittelhaltigen Styrolpolymerisat-Schmelze durch eine Düse in einen Bereich niedrigeren Drucks, **dadurch gekennzeichnet, dass** der Styrolpolymerisat-Schmelze 0,1 bis 10 Gew.-%, bezogen auf Styrolpolymer, eines anorganischen Feststoffe mit einem mittleren Teilchendurchmesser im Bereich von 0,01 bis 100 *µ*m zugegeben wird.

8. Verfahren nach Anspruch 7, **dadurch gekennzeichnet, dass** der Styrolpolymerisat-Schmelze 0,1 bis 10 Gew.-%, bezogen auf Styrolpolymer, Ruß oder Graphit zugegeben wird.

9. Verfahren nach Anspruch 7 oder 8, **dadurch gekennzeichnet, dass** das Treibmittel CO₂ umfasst.
